# EUROPÄISCHE PATENTSCHRIFT

(11) **EP 2 551 568 B1**
(45) Veröffentlichungstag und Bekanntmachung des Hinweises auf die Patenterteilung: **11.09.2013**
(21) Anmeldenummer: 12005419.2
(22) Anmeldetag: 25.07.2012
(51) Int. Cl.: F16K 17/30

(54) **Rohrbruchventileinrichtung**
Pipe break valve device
Dispositif de vanne d'arrêt automatique

(30) Priorität: 26.07.2011 DE 102011108430
(43) Veröffentlichungstag der Anmeldung: 30.01.2013
(73) Patentinhaber: Horst Thiele Maschinenbau-Hydraulische Geräte GmbH, 74196 Neuenstadt (DE)
(72) Erfinder: Thiele, Ewald, Dipl.-Ing., 74196 Neuenstadt (DE)
(74) Vertreter: Clemens, Gerhard

(56) Entgegenhaltungen:
- EP-A1- 1 672 259
- WO-A1-01/88420
- US-B1- 7 591 282

## Beschreibung

### TECHNISCHES GEBIET

Die vorliegende Erfindung betrifft eine Rohrbruchventileinrichtung für ein Fließmedium, insbesondere Hydrauliköl, innerhalb eines Leitungssystems mit einem Gehäuse, durch das das Fließmedium fließt, mit einem Eingangsanschluss, insbesondere für ein Rohr, und einem Ausgangsanschluss, insbesondere für eine flexible Leitung, wobei im normalen Betriebszustand das Fließmedium das Innere des Gehäuses durchfließt, einem entgegen der Wirkung elastischer Mittel verschiebbaren Ventilschieber zum Sperren der Rohrbruchventileinrichtung im Falle eines Leitungsbruchs oder einer Leckage, einer Drosseleinrichtung mit Drosselkanälen und einem Raumvolumen, das über die Drosselkanäle eingangsseitig und ausgangsseitig mit dem Inneren des Gehäuses in Kommunikationsverbindung steht, wobei die Drosseleinrichtung verhindert, dass eine schlagartig auftretende Druckschwankung eine Sperrung durch den Ventilschieber bewirkt, und im Fall eines Leitungsbruches die Sperrung durch den Ventilschieber ermöglicht.

### STAND DER TECHNIK

Ein Einsatzfall derartiger Rohrbruchventileinrichtungen ist bei Schwerlastfahrzeugen mit mehreren Achslinien, wobei die Rohrbruchventileinheiten als Vorschaltventile an den Achsausgleichszylindern wirken. Die Achsausgleichszylinder sind beweglich eingebaut, so dass als Zuführungsleitung für das Fließmedium, zum Beispiel Hydrauliköl, vor dem Zylinder eine flexible Leitung, insbesondere ein Hochdruckschlauchstück eingesetzt wird. Die Drosseleinrichtung bewirkt, dass schlagartig kurzzeitig auftretende Druckänderungen, zum Beispiel aufgrund von Unebenheiten in der Fahrbahn, nicht zu einem Schließen des Ventils führen. Weiterhin bewirkt die Drosseleinrichtung, dass bei Auftreten eines anhaltenden Differenzdruckes zwischen dem Eingangsanschluss und dem Ausgangsanschluss, was beispielsweise beim Platzen eines Schlauches der Fall ist, das Rohrbruchventil den Durchgang dichtend absperrt durch die entsprechende Querbewegung des Ventilschiebers.

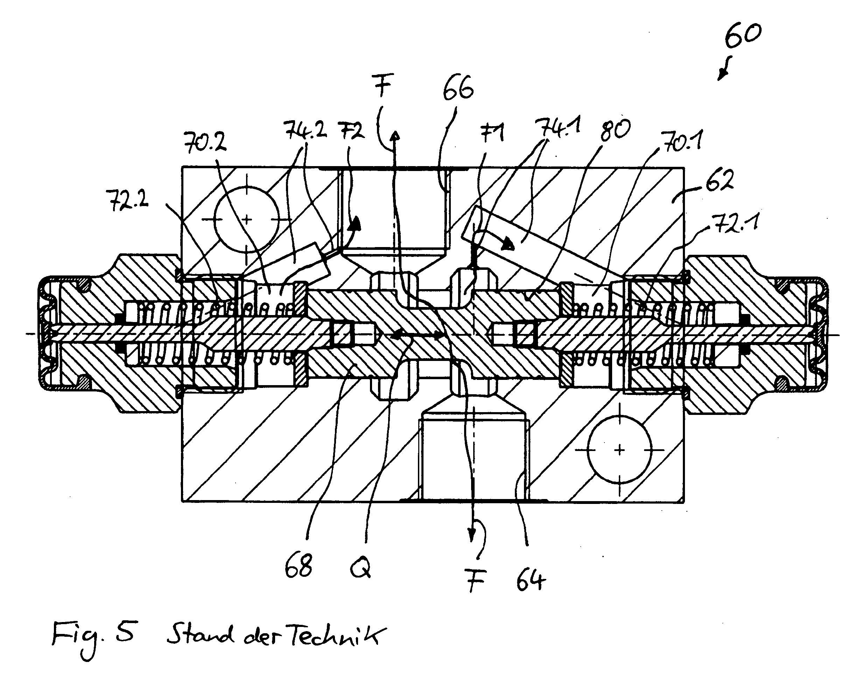

In Fig. 5 ist schematisch im Querschnitt eine bekannte Rohrbruchventileinrichtung 60 der Anmelderin dargestellt. Die Rohrbruchventileinrichtung 60 weist ein Gehäuse 62 auf, das in Fig. 5 unterseitig einen Eingangsanschluss 64 und oberseitig einen Ausgangsanschluss 66 besitzt. Beide Anschlüsse 64, 66 stehen innerhalb des Gehäuses 62 in Kommunikationsverbindung, wobei in Fig. 5 die Fließrichtung des Mediums, zum Beispiel Hydrauliköl, mit dem Pfeil F gekennzeichnet ist.

In dem Gehäuse 62 ist eine durchgehende Querbohrung 80 vorhanden, innerhalb derer ein Ventilschieber 68 in Querrichtung Q verschiebbar gelagert ist. Jeweils links und rechts des Ventilschiebers 68 ist ein abgedichteter Ölraum 70.1, 70.2 vorhanden, der mit dem Fleißquerschnitt des Gehäuses über Drosselkanäle 74 in Kommunikationsverbindung steht, sowohl jeweils mit dem Eingangsanschlussbereich als auch mit dem Ausgangsanschlussbereich. Der erste Kanalbereich der Drosselkanäle weist einen sehr kleinen Bohrungsquerschnitt auf, der letztendlich einen Drosseleffekt bewirkt. Innerhalb der Ölräume 70.1, 70.2 sind jeweils elastische Mittel 72.1, 72.2 vorhanden, die auf den Ventilschieber 68 einwirken und ihn im normalen Betriebszustand in geöffnetem Zustand halten.

Im normalen Betriebszustand sind beide Ölräume 70.1, 70.2 entsprechend mit Hydrauliköl gefüllt und stehen, wie bereits erwähnt, mit dem Inneren des Fließquerschnitts in Kommunikationsverbindung. Die Steifigkeit der elastischen Mittel 72.1 beziehungsweise 72.2 ist dabei so eingestellt, dass bei der auftretenden Druckdifferenz beim Durchströmen des Fließmediums durch das Gehäuse 62 der Ventilschieber 68 in Offenstellung steht.

Die Drosselkanäle 74.1, 74.2 und Ölräume 70.1, 70.2 in Verbindung mit den elastischen Mitteln 72.1, 72.2 stellen eine Drosselemnchtung dar, die verhindert, dass im Falle einer plötzlich kurzzeitig auftretenden Druckspitze das Ventil sperrt, da durch die gegebene Drosselwirkung sich der Füllzustand der Ölräume 70.1, 70.2 im Wesentlichen nicht ändert, wodurch der Ventilschieber 68 in seiner Position gehalten wird. Tritt nun auf einer Seite beispielsweise ein Leitungsbruch auf, das heißt eine Situation, in der ein Druckunterschied zwischen Eingangs- und Ausgangsbereich über einen längeren Zeitraum ansteht, fließt Öl über den Drosselkanal 74.1 in den rechten Ölraum 70.1 (Pfeil F1) und gleichzeitig fließt Öl aus dem linken Ölraum 70.2 über die Drosselkanäle 74.2 in den Ausgangsbereich (Pfeil F2) ab, so dass sich im Endeffekt eine Verschiebung des Ventilschiebers 68 nach links ergibt und nach Erreichen eines vorgegebenen Verschiebeweges der Ventilschieber 68 den Durchfluss sperrt. Eine Verschiebebewegung nach links führt der Ventilschieber 68 dann durch, wenn die oberseitig angeschlossene Leitung bricht. Bricht die unterseitig angeschlossene Leitung, so führt der Ventilschieber 68 eine Verschiebebewegung in Querrichtung Q nach rechts durch, um den Durchfluss zu sperren.

Die bekannte Rohrbruchventileinrichtung gewährleistet eine dauerhaft zuverlässige Funktion. Der relativ komplizierte Konstruktionsaufbau, die Vielzahl der Bauteile und die komplexe Geometrie erfordern einen hohen Aufwand, so dass im Hinblick auf eine wirtschaftliche Herstellung hohe Kosten entstehen, die sich im Preis niederschlagen müssen.

In der DE 10 2009 043 568 A1 ist ein hydraulisches Sicherheitsventil zum Absperren eines mit einer Pumpe verbindbaren ersten Kanals gegenüber einem mit einem hydraulischen Verbraucher verbindbaren zweiten Kanal beschrieben. Dabei sind zwei koaxial angeordnete separate Sperrkolben in Axialrichtung verschieblich gelagert, die jeweils durch die Federkraft einer Feder beaufschlagt sind und die infolge des Überschreitens einer Strömungsgeschwindigkeit des hydraulischen Mediums und einer dadurch entstehenden Druckdifferenz gegen die Federkraft der jeweiligen Feder von einer Offenstellung in eine Sperrstellung überführbar sind. Durch diese Bewegung werden die Kanäle abgesperrt. Dabei ist eine Dämpfungseinrichtung zum gedämpften beziehungsweise zeitverzögerten Schließen der Sperrkolben vorhanden. Die Dämpfungseinrichtung ist als Kammer ausgebildet, die über eine Drosselbohrung mit den Fluiden in Kommunikationsverbindung steht. Die Drosselkammer muss daher zwingend entlüftet werden. Hierzu sind entsprechende Entlüftungskanäle vorgesehen, die mit Schrauben verschlossen beziehungsweise bedarfsweise geöffnet werden können. Aufgrund der gewählten Konstruktion ist es erforderlich, dass zwischen der Innenwandung des Sperrkolbens und der Innenwandung des Gehäuses Dichtmittel vorhanden sind. Diese vorhandenen Dichtmittel können problematisch sein, da sie aufgrund von Alterungseinflüssen bei lang andauernder Nichtbetätigung verkleben können und somit ihre Funktion im Bedarfsfall nicht mehr gewährleisten können. Dadurch, dass diese Sicherheitsventil zwingend entlüftet werden muss, ist beispielsweise an einem Fahrzeug eine einfache Situation zu gewährleisten, in der das eingebaute Sicherheitsventil zugänglich ist um eine Entlüftung durchzuführen.

Die nachveröffentlichte deutsche Gebrauchsmusterschrift DE 20 2011 050 667 U1 betrifft eine hydraulische Rohr-, Leitungs- oder Schlauchbruch-Sicherheitssperrventil zum Absperren eines mit einer Pumpe verbindbaren Zuleitungskanal gegenüber einem mit einem hydraulischen Verbraucher verbindbaren Ablaufleitungskanal. Der Zuleitungskanal und Ableitungskanal münden in eine in Richtung einer Axialachse sich erstreckende Axialbohrung eines Ventilgehäuses, in der ein Sperrkolben verschiebbar gelagert ist, der durch Federkraft einer Feder in Axialrichtung beaufschlagt ist, wodurch der Sperrkolben bis zu einer bestimmten, einen Wert größer als Null betragenden Grenz-Strömungsgeschwindigkeit eines hydraulischen Medium in einer Offenstellung gehalten ist. Auch hier ist über Drosselkanäle eine separate Dämpfungskammer angeschlossen, die über Lüftungskanäle entlüftet werden muss, um eine dauerhaft zuverlässige Funktion zu gewährleisten. Der Aufbau dieses Ventils ist relativ aufwendig und damit kostenintensiv. Zudem ist es auch hier zwingend erforderlich, dass zwischen der Außenwandung des beweglichen Sperrkolbens und der Innenwandung des Gehäuses Dichtmittel vorhanden sind, die die bereits oben beschriebenen Probleme mit sich bringen können.

Die deutsche Offenlegungsschrift DE 2 352 826 offenbart ein gedämpft schließendes hydraulisches Rohrbruchventil mit einem von einer Druckfeder offen gehaltenen Sperrkolben zwischen einem Verbraucheranschluss und einem zur Pumpe und Rücklauf führenden Anschluss. Dabei ist über ein relativ kompliziertes Kanalsystem ein Dämpfungsraum mit einem Organ in Kommunikationsverbindung mit dem Raum des Sperrkolbens vorhanden, welches den Durchflussquerschnitt wenigstens einer Bohrung unter der Wirkung eines zwischen den Anschlüssen sich aufbauenden, den Sperrkolben gegen die Wirkung der Druckfeder verschiebenden Druckabfalls nach Beginn dieser Verschiebung verringert. Dadurch ist die Dämpfungswirkung einstellbar. Dieses Ventil ist in seinem Aufbau auch sehr komplex und daher hinsichtlich eines wirtschaftlichen Einsatzes nur beschränkt verwendbar.

Die US 6,513,545 B2 offenbart ein Rückschlagventil, insbesondere geeignet für Gasleitungen, bei dem eine Einstellschraube eingesetzt wird, die auf eine Feder einwirkt, um deren Federkraft und damit deren Rückschlagcharakteristik einzustellen. Diese Ventileinrichtung weist keinerlei Dämpfungseigenschaften auf und ist somit für den Einsatzfall der anmeldegemäßen Rohrbruchventileinrichtung, beispielsweise bei Schwerlastfahrzeugen, nicht geeignet, da sie nicht in der Lage ist "zulässige" Druckschwankungen unter Beibehaltung der Funktion aufrechtzuerhalten.

In dem US-Patent 3,995,656 ist ein Ventil für eine Hochdruckgasleitung beschrieben, die als Regulierungsventil ausgebildet ist und keine Schlauchbruchsicherung darstellt. Im Übrigen weist dieses Ventil auch keine Dämpfungseigenschaften auf.

Die US-Patentschrift 5,507,466 offenbart eine Ventileinrichtung, die in der Lage ist, nach Durchfluss eines vorgegebenen Fluidvolumens das Ventil automatisch abzusperren. Der hierzu eingesetzte Ventilschieber ist längsverschieblich gelagert und befindet sich innerhalb einer durchgehenden Ausnehmung. Mit einem derartigen Ventil ist es möglich, eine Dosierung eines Volumens vorzunehmen. Sobald dieses Volumen erreicht ist und die verbraucherseitige Öffnung geschlossen ist, fährt der Ventilschieber in seine Ausgangsstellung zurück, da er unter der Wirkung einer Federkraft steht und befindet sich dann in dem Offen-Zustand, um erneut eine vorgegebene Volumenmenge bei Bedarf abzugeben. Sobald der Ventilschieber stehen bleibt, beispielsweise in Folge der Sperrung des Abflusskanals, fährt er in seine Ausgangsstellung zurück. Auch hier sind zwischen der Außenwandung des Ventilschiebers und der Innenwandung des Gehäuses Dichtmittel angeordnet, um eine dauerhaft zuverlässige Funktion zu gewährleisten. Das dargestellte Ventil enthält relativ viele Zusatzbauteile und gewährleistet auch eine Rückschlagfunktion, das heißt bei plötzlich auftretenden hohen Fließgeschwindigkeiten wird ein Verschluss durch den Ventilschieber eingeleitet.

In der US 2,699,799 ist ein Rückschlagventil beschrieben, bei dem der Ventilschieber unter dem Einfluss einer Federkraft steht und innerhalb einer durchgehenden Ausnehmung im Gehäuse angeordnet ist. Dieses Ventil gewährleistet automatisch einen Durchfluss unter Niederdruck in eine der Richtungen und sperrt, sobald in der anderen Richtung ein Rohrdruck ansteht.

Die EP 1 672 259 A1 offenbart ein Sicherheitsventil, bei der ein Ventilschieber längsverschieblich innerhalb einer durchgehenden Ausnehmung vorhanden ist. Der Ventilschieber steht unter der Wirkung einer Federkraft, die in einer Dämpfungskammer angeordnet ist. Die Dämpfungskammer beeinflusst den Verschiebeweg des Ventilschiebers unter bestimmten Voraussetzungen. Der Ventilschieber selbst ist gegenüber der Innenwandung des Gehäuses des Ventils über spezielle Dichtelemente abgedichtet. Auch hier besteht die Problematik durch die vorhandenen Dichtelemente bezüglich einer dauerhaft zuverlässigen Funktion, insbesondere bezüglich einer über einen längeren Zeitraum andauernden Nichtbetätigung des Ventilschiebers, was die Wirkung der Dichtmittel beeinflussen kann und insbesondere erforderliche Reibungswerte, die eine Funktion gewährleisten sollen, nicht mehr zur Verfügung stehen, so dass insgesamt die Funktionalität in Bedarfsfall dann nicht mehr gewährleistet ist.

### DARSTELLUNG DER ERFINDUNG

Ausgehend vom genannten Stand der Technik liegt der vorliegenden Erfindung die Aufgabe beziehungsweise das technische Problem zugrunde, eine Rohrbruchventileinrichtung der eingangs genannten Art anzugeben, die wirtschaftlich hergestellt werden kann, einfach montiert werden kann, wenig Bauteile aufweist und dabei gleichzeitig eine dauerhaft zuverlässige Funktion gewährleistet. Der Erfindung liegt weiterhin die Aufgabe zugrunde, eine Rohrbruchventileinrichtung anzugeben, die äußerst kompakt aufgebaut ist, auch bei beengten Platzverhältnissen problemlos eingebaut werden kann und ein geringeres Gewicht aufweist. Darüber hinaus soll eine automatische Entlüftung gewährleistet sein, so dass eine Zugänglichkeit nach dem Einbau entfallen kann. Weiterhin soll eine einfache Einstellbarkeit bezüglich der Ansprechcharakteristik der Ventileinrichtung möglich sein.

Die erfindungsgemäße Rohrbruchventileinrichtung ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Die erfindungsgemäße Rohrbruchventileinrichtung zeichnet sich demgemäß dadurch aus, dass das Gehäuse eine in Fließrichtung durchgehende Ausnehmung aufweist, in der Ausnehmung der Ventilschieber in Fließrichtung verschieblich angeordnet ist und das Raumvolumen der Drosseleinrichtung zumindest bereichsweise zwischen der Außenwandung des Ventilschiebers und der Innenwandung des Gehäuses angeordnet ist, die eingangsseitig und ausgangsseitig vorhandenen Drosselkanäle durch einen ersten Spalt und einem zweiten Spalt gebildet werden, die jeweils zwischen der Außenwandung des Ventilschiebers und der Innenwandung des Gehäuses vorhanden sind, und zwischen der Innenwandung des Gehäuses und der Außenwandung des Ventilschiebers keine Dichtmittel vorhanden sind.

Eine besonders bevorzugte Ausgestaltung der erfindungsgemäßen Rohrbruchventileinrichtung zeichnet sich dadurch aus, dass die Drosselkanäle durch an/in der Wandung des Ventilschiebers und/oder des Gehäuses vorhandene Spalte oder Ausnehmungen gebildet werden.

Hinsichtlich einer besonders kompakten Bauweise zeichnet sich eine besonders vorteilhafte Weiterbildung der erfindungsgemäßen Rohrbruchventileinrichtung dadurch aus, dass die elastischen Mittel in dem Raumvolumen angeordnet sind und den Vertikalschieber im normalen Betriebszustand in geöffneter Stellung halten, wobei die elastischen Mittel bevorzugt als bewährte Schraubenfedern ausgebildet sind.

Eine hinsichtlich der Fertigung besonders vorteilhafte Ausgestaltung, die einen geringen Fertigungsaufwand ermöglicht, zeichnet sich dadurch aus, dass der Ventilschieber einen oberen an der Gehäuseinnenwandung anliegenden Flansch aufweist und in Fließrichtung beabstandet an der Innenwandung des Gehäuses eine nach innen ragende an der Außenwandung des Ventilschiebers anliegende Vorsprungeinheit vorhanden ist und insbesondere die elastischen Mittel zwischen dem Flansch und der Vorsprungeinheit angeordnet sind.

Zur Gewährleistung einer dauerhaft zuverlässigen Funktion hat es sich als vorteilhaft herausgestellt, die erfindungsgemäße Rohrbruchventileinrichtung so auszubilden, dass der Ventilschieber in einem Endbereich einen Ventilteller aufweist, der im Falle eines Leitungsbruches dichtend mit einem an der Innenwandung des Gehäuses vorhandenen Ventilsitz zur Anlage kommt, wobei die Verschiebung des Ventilschiebers durch Entweichen von Fluidmedium aus dem Raumvolumen über die Drosselkanäle aufgrund der im Falle eines Leitungsbruches vorhandenen Druckdifferenz ermöglicht wird.

Hinsichtlich einer besonders wirtschaftlichen Fertigung zeichnet sich eine vorteilhafte Ausführungsvariante dadurch aus, dass an der nach außen weisenden Stirnwand des Flansches und/oder an der nach innen weisenden Stirnwand der Vorsprungeinheit zumindest ein oberer beziehungsweise unterer Drosselspalt eingeformt ist, wobei in diesem Zusammenhang in einer bevorzugten Ausgestaltung die oberen und/oder unteren Drosselpunkte radial in einem vorgegebenen Winkelraster vorhanden sein können.

Zur Anpassung der Drosselfunktion hinsichtlich ihrer zeitlichen Wirkung ist es gemäß einer besonders vorteilhaften Weiterbildung der erfindungsgemäßen Rohrbruchventileinrichtung auch möglich, in der Wandung des Ventilschiebers im Wesentlichen quer zur Fließrichtung weitere Drosselkanäle vorzusehen.

Um einen Fließquerschnitt zu erzielen, dessen Fließwiderstand gering gehalten ist, zeichnet sich eine vorteilhafte Ausgestaltung dadurch aus, dass der Ventilschieber in Fließrichtung eine offene Sacklochbohrung aufweist, die im Endbereich der Sacklochbohrung weitere Durchgangsbohrungen aufweist.

Für eine einfache Montage vor Ort der gesamten Rohrbruchventileinrichtung ist es besonders vorteilhaft, dass das Gehäuse außenseitig eine polygonale Umfangskontur, insbesondere Sechskantumfangskontur, aufweist, so dass der Ansatz eines Werkzeuges problemlos möglich ist.

Die erfindungsgemäße Rohrbruchventileinrichtung zeichnet sich insgesamt gegenüber den bekannten Rohrbruchventileinrichtungen mit Dämpfung in besonders vorteilhafter Art und Weise dadurch aus, dass eine dauerhaft zuverlässige Funktion mit Dämpfungseigenschaften mit extrem wenigen Bauteilen erzielt werden kann, nämlich: ein Ventilschieber mit einem Ventilteller mit zusätzlichen Bohrungen, einem Gehäuse mit Sechskantumfangskontur, einer Druckfeder zum Einstellen der Position des Ventilschiebers im Nennlastbetrieb und einem Sicherungsring.

Ein wesentlicher Gedanke der erfinderischen Rohrbruchventileinrichtung besteht darin, den Ventilschieber nicht quer zur Fließrichtung - wie bei den bekannten Rohrbruchventileinrichtungen - sondern in Fließrichtung verschieblich zu gestalten, so dass ein sehr kompakter Aufbau erzielt werden kann, in dem in einfacher Art und Weise der Ölraum für die Drosseleinrichtung um den Ventilschieber herum angeordnet ist. Durch die geringe Bauteileanzahl reduzieren sich die Fertigungskosten deutlich. Des Weiteren ist durch den einfachen konstruktiven Aufbau für einige Bauteile (zum Beispiel Ventilschieber, Gehäuse, Ventilteller) eine vollautomatische Fertigung möglich. Die übrigen Bauteile (elastische Mittel, Sicherungsring) sind Serienbauteile. Die Montage der wenigen Bauteile ist einfach und kann schnell durchgeführt werden.

Darüber hinaus weist die erfindungsgemäße Rohrbruchventileinrichtung ein deutlich geringeres Gewicht als die bekannten Einrichtungen auf und muss am Einsatzort lediglich durch einfaches Schrauben befestigt beziehungsweise angeschlagen werden. Die kompakte Bauweise ermöglicht auch einen Einsatz bei räumlich sehr beengten Verhältnissen.

Bei den bekannten Rohrbruchventileinrichtungen muss das Hydrauliköl im Auslösefall, das heißt beispielsweise im Fall eines Leitungsbruches, über die Dämpfungskanäle in einen Ölraum hineinfließen und über den weiteren Ölraum wieder herausfließen, während hingegen bei der erfindungsgemäßen Rohrbruchventileinrichtung im Auslösefall das Hydrauliköl lediglich aus einem Raumvolumen herausfließen muss, was eine wesentlich geringere Anfälligkeit bezüglich der Verschmutzungsgefahr bewirkt.

Im Übrigen ermöglicht die erfindungsgemäße Rohrbruchventileinheit eine Konstruktion, insbesondere aufgrund der Verwendung von Spalten als Drosselkanäle, dass keinerlei Dichtmittel eingesetzt werden müssen. Dadurch wird die Altersproblematik der Dichtmittel vollständig umgangen. Eine permanente Funktionsfähigkeit ist gewährleistet.

Dadurch, dass die Drosselkammer über zwei Spalte mit dem Durchflussquerschnitt in Verbindung steht, findet eine automatische Entlüftung dieser Kammer durch den Fluiddurchfluss statt, so dass zusätzliche Entlüftungskanäle vollständig entfallen können. Praktische Versuche haben gezeigt, dass eine Selbstentlüftung durch Fließen des Fluids im Einsatzfall nach wenigen Sekunden gegeben ist. Dadurch entfallen die beim Benutzer üblicherweise vorzunehmenden Entlüftungsarbeiten vollständig. Eine weiterer großer Vorteil der automatischen Entlüftung liegt darin, dass das Ventil im eingebauten Zustand nicht mehr frei zugänglich sein muss, um Entlüftungsarbeiten durchzuführen. Dadurch sind grundsätzlich andere Aufbauten möglich, das heißt die Fahrzeugaufbauentwickler geniesen diesbezüglich größere Konstruktionsfreiheiten.

Insgesamt steht eine sehr kompakte, wirtschaftlich herzustellende, einfach einzubauende und eine dauerhaft zuverlässige Funktion gewährleistende Rohrbruchventileinrichtung zur Verfügung.

Eine besonders vorteilhafte Ausgestaltung der erfindungsgemäßen Rohrbruchventileinrichtung zeichnet sich dadurch aus, dass im Bereich der Innenwandung der Sacklochbohrung des Ventilschiebers eine in Fließrichtung gesehen unterseitige erste Sicherungseinheit, insbesondere Absatz der Innenwandung des Ventilschiebers, und in Fließrichtung gesehen oberseitige beabstandete zweite Sicherungseinheit, insbesondere zweite Ausnehmung in der Innenwandung des Ventilschiebers geeignet für ein Sicherungsring, vorhanden ist zum wahlweise lösbar arretierbaren Anordnen einer Drosselscheibe mit zumindest einer Drosselausnehmung zwischen beiden Sicherungseinheiten, die den Querschnitt der Sacklochausnehmung verjüngt.

Um eine optimale Zugänglichkeit zu gewährleisten, ist gemäß einer bevorzugten Ausgestaltung die Drosselscheibe im oberen offenen Endbereich der Sacklochbohrung des Ventilschiebers angeordnet.

Der Einsatz einer derartigen Drosselscheibe ermöglicht in einfachster Art und Weise das Einstellen der Ansprechcharaktistik durch Einsatz einer Drosselscheibe mit dem dem jeweiligen Einsatzfall optimal zugeordneten Drosselausnehmungsdurchmesser. Der Durchfluss des Fluids erzeugt letztendlich die Kraft, die den Ventilschieber bewegt. Bisher musste die Einstellung über die Federstellung oder Veränderung des Durchmessers der Drosselöffnungen durchgeführt werden, was sehr aufwendig ist. Erfindungsgemäß wird durch den Einsatz der Drosselscheibe der Durchflusswiderstand insgesamt verändert und dadurch die Ansprechcharakteristik dieses Ventilschiebers in einfacher Art und Weise dem jeweiligen Einsatzfall angepasst. Ein Nachteil bezüglich der Einstellbarkeit bei vorhandenen Drosselbohrungen besteht in deren hohen Toleranzempfindlichkeit. Zum Einstellen der Ansprechcharakteristik müssen beispielsweise Änderungen in der Drosselbohrung im Bereich von beispielsweise 0,1 mm Schritten vorgenommen werden. Aufgrund eventueller auftretender Verschmutzungen kann die Toleranzempfindlichkeit drastisch ansteigen. In vielen Fällen ist bei derartigen Lösungen ein zuverlässiges Auslösen bei relativ kleinen Durchflüssen nicht mehr möglich. Im Gegensatz hierzu, ist durch Einsatz der erfindungsgemäßen Drosselscheibe auch der Einsatz der Ventileinrichtung bei kleinen Durchflüssen problemlos möglich, wobei gleichzeitig auch eine Einstellbarkeit durch einfaches Tauschen der Drosselscheiben mit unterschiedlichen Drosselausnehmungsdurchmessern folgen kann.

So verwenden beispielsweise Hersteller kleinerer Fahrzeuge meist auch kleinere Zylinder und haben somit geringere Durchflüsse. Bei der Verwendung seitheriger Schlauchbruchsicherungen können daher Probleme bezüglich der Ansprechcharakteristik auftreten. Mit dem neuen erfindungsgemäßen Ventil steht jedoch auch für diese Fälle eine praktikable Lösung zur Verfügung.

Weitere Ausführungsformen und Vorteile der Erfindung ergeben sich durch die in den Ansprüchen ferner aufgeführten Merkmale sowie durch das nachstehend angegebene Ausführungsbeispiel. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: stark schematisierte Darstellung des Einsatzes einer erfindungsgemäßen Rohrbruchventileinrichtung, geschaltet zwischen einer Druckquelle und einem Verbraucher, wobei zwischen Druckquelle und Ventileinrichtung ein Rohr und zwischen Ventileinrichtung und Verbraucher ein Schlauch verläuft,
- Fig. 2: schematischer halbseitiger Längsquerschnitt und halbseitige Draufsicht auf eine erfindungsgemäße Rohrbruchventileinrichtung mit einem in Fließrichtung verschiebbaren Ventilschieber und einem Ölraum,
- Fig. 3: schematische Stirnansicht der Rohrbruchventileinrichtung gemäß Fig. 2,
- Fig. 4: schematische Perspektivansicht der Rohrbruchventileinrichtung gemäß Fig. 2,
- Fig. 5: schematischer Querschnitt durch eine aus dem Stand der Technik bekannte Rohrbruchventileinrichtung mit einem in Querrichtung verschiebbaren Ventilschieber und zwei über Drosselkanäle angeschlossene Ölräume,
- Fig. 6: schematischer halbseitiger Längsquerschnitt und halbseitige Draufsicht auf die erfindungsgemäße Rohrbruchventileinrichtung gemäß Fig. 2, wobei innerhalb des Ventilschiebers im Durchflussquerschnitt eine Drosselscheibe eingesetzt ist,
- Fig. 7: schematische Detailschnittdarstellung des Details A von Fig. 6 und
- Fig. 8: schematische Draufsicht auf eine Drosselscheibe, die im Ventilschieber der Rohrbruchventileinrichtung gemäß Fig. 6 und 7 angeordnet ist.

### WEGE ZUM AUSFÜHREN DER ERFINDUNG

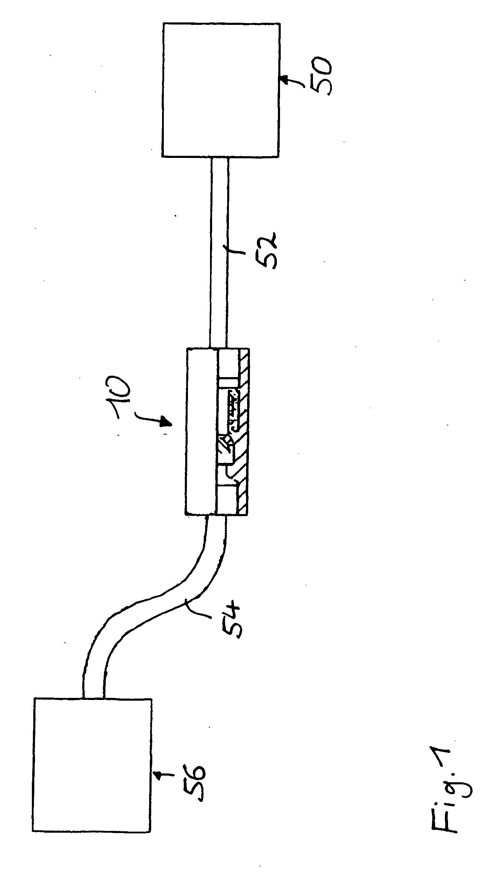

In Fig. 1 ist stark schematisiert eine Rohrbruchventileinrichtung 10 im praktischen Einsatzfall dargestellt. Die Rohrbruchventileinrichtung 10 ist in ihrem einen Endbereich über ein Rohr 52 an eine Druckluftquelle 50 angeschlossen. Am gegenüberliegenden anderen Endbereich ist ein flexibler Schlauch 54 angeschlossen, der zu einem Verbraucher 56, beispielsweise Hydraulikzylinder, führt. Die Rohrbruchventileinrichtung 10 dient dazu, im Falle eines Schlauchbruches des Schlauches 54 den Durchfluss des Fließmediums durch die Rohrbruchventileinrichtung 10 zu sperren, wobei jedoch gleichzeitig gewährleistet sein muss, dass bei kurzzeitig auftretenden Druckspitzen innerhalb des Leitungssystems die Rohrbruchventileinrichtung 10 offen bleibt und keine Sperrung des Leitungssystems durchführt.

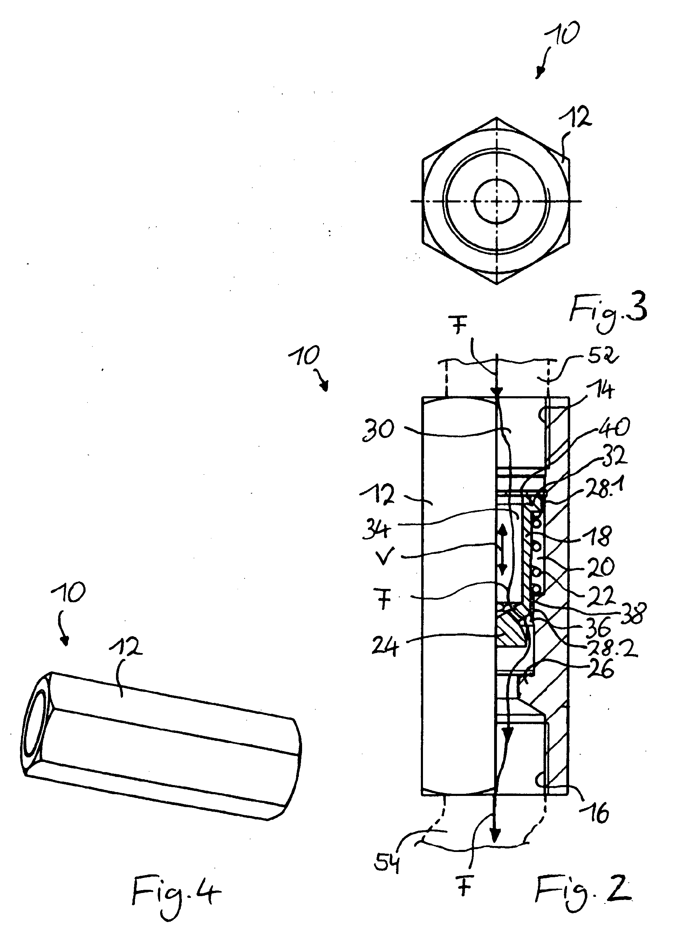

Ein Ausführungsbeispiel einer erfindungsgemäßen Rohrbruchventileinrichtung 10 ist in den Fig. 2 bis 4 schematisch dargestellt. Die erfindungsgemäße Rohrbruchventileinrichtung 10 ist sehr kompakt und mit wenigen Bauteilen ausgeführt. Wie aus Fig. 4 ersichtlich, besitzt die Rohrbruchventileinrichtung 10 ein kompaktes Gehäuse 12 mit einer Sechskantaußenumfangskontur. Innerhalb dieses kompakten Gehäuses 12 ist die erfindungsgemäße Rohrbruchventileinrichtung 10 konstruktiv ausgeführt.

Das Gehäuse 12 der erfindungsgemäßen Rohrbruchventileinrichtung 10 besitzt eine durchgehende Ausnehmung 30 (siehe Fig. 2), innerhalb derer ein Ventilschieber 18 in Fließrichtung und entgegen der Fließrichtung (die Fließrichtung ist in Fig. 2 mit dem Pfeil F dargestellt) längs verschieblich (siehe Pfeil V) angeordnet ist. Im in Fig. 2 oberen Endbereich weist die Innenwandung der Ausnehmung 30 einen Eingangsanschluss 14 auf, der geeignet ist, ein von der Druckquelle 50 kommendes Rohr 52 anzuschließen. Im dargestellten Ausführungsbeispiel ist der Eingangsanschluss 14 als Innengewinde ausgebildet. Im gegenüberliegenden Endbereich besitzt das Gehäuse 12 einen Ausgangsanschluss 16, der ebenfalls als Innengewinde ausgebildet ist, und an den ein flexibler Schlauch 54 anschließbar ist.

Der Ventilschieber 18 besitzt in seinem oberen Bereich einen nach außen überstehenden oberen Flansch 32 und weist im Inneren eine nach oben offene Sacklochbohrung 34 auf. Im unteren Bereich ist unterhalb der Sacklochbohrung 34 ein Ventilteller 24 angeschlossen, wobei deutlich zwischen der Wandung des Ventilschiebers 18 und dem Ventilteller 24 radial in Umfangsrichtung rastermäßig vorhandene Durchgangsöffnung 36 für das Fließmedium vorhanden sind, so dass das Fließmedium im Betriebszustand von oben nach unten durch die Rohrbruchventileinrichtung 10 fließen kann.

In den Fig. 2 bis 4 ist die Rohrbruchventileinrichtung 10 bezüglich der Stellung des Ventilschiebers 18 im normalen Betriebszustand dargestellt.

Die Stirnaußenwandung des Flansches 32 liegt an der Innenwandung der Ausnehmung 30 des Gehäuses 12 an. Unterhalb des Flansches 32 ist an der Innenwandung des Gehäuses 12 eine nach innen ragende Vorsprungeinheit 38 vorhanden, die an der Außenwandung des Ventilschiebers 18 anliegt. Dadurch wird in dem Bereich zwischen dem Flansch 32 und der Vorsprungeinheit 38 und der Außenwandung des Ventilschiebers 18 und der Innenwandung des Gehäuses 12 ein Raumvolumen 20, insbesondere Ölraum, gebildet, der über an der Stirnseite des oberen Flansches 32 vorhandene obere Drosselkanäle 28.1 und an der Stirnaußenseite der Vorsprungeinheit 38 vorhandene untere Drosselkanäle 28.2 mit dem Inneren des Gehäuses 12, das heißt mit dem Fließmedium in Kommunikationsverbindung steht. Im Betriebszustand ist dieser Volumenraum 20 mit Fließmedium gefüllt.

Gleichzeitig sind innerhalb des Raumvolumens 20 elastische Mittel 22 vorhanden, die als Schraubenfeder ausgebildet sind, und sich auf der Oberseite der Vorsprungeinheit 38 und der Unterseite des Flansches 32 abstützen.

Unmittelbar oberhalb des Ventilschiebers 18 ist an der Innenwandung des Gehäuses 12 ein Sicherungsring 40 eingelegt, gegen den die elastischen Mittel 22 den Ventilschieber 18 im Betriebszustand drücken. Die Federkraft der elastischen Mittel 22 ist dabei so gewählt, dass der Ventilschieber sich im normalen Betriebszustand in der in Fig. 2 dargestellten, geöffneten Position befindet.

Unterhalb der Vorsprungeinheit ist weiterhin an der Innenwandung des Gehäuses 12 ein nach innen weisender Ventilsitz 26 vorhanden.

Wie bereits beschrieben, ist die Federkraft der elastischen Mittel 22 so gewählt, dass trotz der im Betriebszustand aufgrund der vorhandenen Fließkanalstruktur entstehenden Druckunterschiede der Ventilschieber 18 gegen den Sicherungsring 40 nach oben gedrückt wird. In diesem Zustand ist das Raumvolumen 20 mit Fließmedium gefüllt. Tritt nun kurzzeitig ein erhöhter Volumenstrom auf, so verändert sich die Position des Ventilschiebers 18 nicht in dem Maße, dass kein Durchfluss in Fließrichtung F mehr möglich ist, da durch die Drosselkanäle 28.1, 28.2 eine Dämpfung erzielt wird, so dass stoßartige Druckdifferenzen aufgrund kurzzeitiger Volumenstromspitzen zu keiner Sperrung der Rohrbruchventileinrichtung 10 führen.

Tritt nun am Schlauch 54 eine Leckage oder ein Schlauchbruch auf, bedeutet dies ebenfalls eine erhöhte Druckdifferenz zwischen Eingangs- und Ausgangsseite der Rohrbruchventileinrichtung 10, die jedoch zeitlich anhält. Aufgrund dieser Druckdifferenz wird der Ventilschieber 18 entgegen der Wirkung der elastischen Mittel 22 nach unten in Richtung V verschoben, da über die unteren Drosselkanäle 28.2 das Fließmedium aus dem Raumvolumen 20 im Laufe der Zeit entweichen kann. Sobald der Ventilteller 24 des Ventilschiebers 18 auf dem Ventilsitz 26 des Gehäuses 12 anliegt, ist die Sperrposition erreicht und ein Durchfluss des Fließmediums durch die Ventileinrichtung 10 unterbrochen.

Im Falle einer großen Leckage oder eines Schlauchbruchs reagiert somit der Ventilschieber 18 etwas zeitverzögert und sperrt die Rohrbruchventileinrichtung 10 kurze Zeit nachdem der Auslösefall eingetreten ist, wobei kurzfristig auftretende Volumenstromspitzen beziehungsweise Druckunterschiede keine Sperrung auslösen.

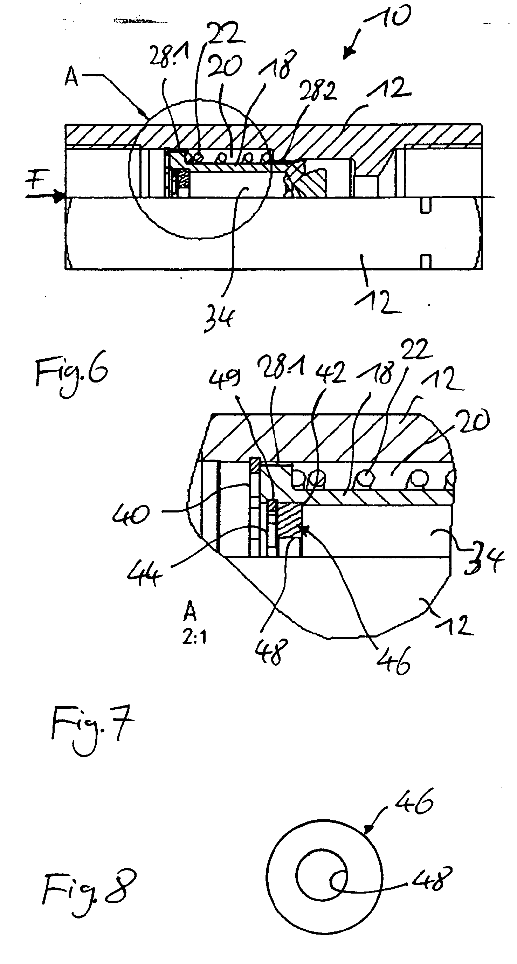

In den Figuren 6 und 7 ist eine besonders vorteilhafte Weiterbildung der oben dargestellten Rohrbruchventileinrichtung 10 dargestellt. Gleiche Bauteile tragen dasselbe Bezugszeichen und werden nicht nochmals erläutert. Der wesentliche Unterschied zu der oben dargestellten Rohrbruchventileinrichtung 10 besteht darin, dass im oberen offenen Endbereich der Sacklochbohrung 34 des Ventilschiebers 18 eine Drosselscheibe 46 angeordnet ist, die eine durchgehende Drosselausnehmung 48 aufweist, mittels derer der Durchflussquerschnitt gegenüber der Innenwandung des Ventilschiebers 18 verkleinert ist.

Zur Lagesicherung der Drosselscheibe 46 ist oberseitig ein zweiter Sicherungsring 44 vorhanden, der in einer Nut 49 der Innenwandung des Ventilschiebers 18 gelagert ist. Dieser zweite Sicherungsring 44 kann beispielsweise ein Seeger-Ring sein. Unterseitig ist die Drosselscheibe 46 auf einem an der Innenwandung des Ventilschiebers eingeformten Absatz 42 gelagert. Der lichte Abstand zwischen den Absatz 42 und der Unterseite des zweiten Sicherungsrings 44 entspricht im Wesentlichen der Dicke der Drosselscheibe 46.

Die Drosselscheibe 46 ist in einfacher Art und Weise von oben her zugänglich und kann problemlos ausgetauscht werden, in dem lediglich zunächst der zweite Sicherungsring 44 und die Drosselscheibe 46 entfernt wird, anschließend die neue Drosselscheibe 46 eingesetzt wird und daran anschließend der zweite Sicherungsring 44 wieder eingebracht wird. Dadurch ist es in einfachster Art und Weise möglich, die Ansprechcharakteristik der Rohrbruchventileinrichtung 10 auf den jeweiligen Bedarfsfall anzupassen. Dies wird dadurch umgesetzt, dass je nach Einsatzfall Drosselscheiben 46 mit unterschiedlichem Durchmesser der Drosselausnehmung 48 eingesetzt werden. Aufwendige Einstellarbeiten - wie im Stand der Technik - , nämlich Einstellung der Feder oder Veränderungen von Drosselkanälen können vollständig entfallen. Die Einstellarbeiten sind so einfach, dass sie sogar vom Nutzer selbst durchgeführt werden können, in dem ihm ein Set von Drosselscheiben 46 mit jeweils unterschiedlichem Durchmesser der Drosselausnehmung 48 zur Verfügung gestellt wird. Als weiterer wesentlicher Vorteil kommt hinzu, dass Entlüftungsmaßnahmen des Ölraums 20 (Drosselraums) vollständig entfallen können, da über die beiden Spalte 28.1 beziehungsweise 28.2 eine automatische Selbstentlüftung während des Betriebes stattfindet.

Die erfindungsgemäße Rohrbruchventileinrichtung 10 ist ein äußerst kompaktes Bauteil mit geringem Gewicht und einer äußerst geringen Anzahl von Bauteilen, die vollautomatisch gefertigt werden können (zum Beispiel Gehäuse 12, Ventilschieber 18 und Ventilteller 24) oder als Serienbauteil zur Verfügung stehen (elastische Mittel 22, Sicherungsring 40), wobei auf den Einsatz von Dichtmittel vollständig verzichtet werden kann, so dass sich sehr geringe Fertigungskosten umsetzen lassen können, eine einfache Montage möglich ist und darüber hinaus eine dauerhaft zuverlässige Funktion gewährleistet wird. Darüber hinaus ist eine automatische Entlüftung gewährleistet, was hinsichtlich der möglichen Einbausituationen große Vorteile mit sich bringt, da eine nachträgliche Zugänglichkeit nicht mehr erforderlich ist. Mit der Möglichkeit der äußerst einfachen Verwendung von Drosselscheiben 46 mit jeweils dem Einzelfall angepassten Drosselausnehmungen 48, ist eine äußerst einfach durchzuführende Anpassung an den jeweiligen Einsatzfall mit einfachsten Mittel und Maßnahmen umsetzbar.

## Patentansprüche

1. Rohrbruchventileinrichtung (10) für ein Fließmedium, insbesondere Hydrauliköl, innerhalb eines Leitungssystems mit
- einem Gehäuse (12), durch das das Fließmedium fließt, mit einem Eingangsanschluss (14), insbesondere für ein Rohr (52), und einem Ausgangsanschluss (16), insbesondere für eine flexible Leitung (54),
- wobei im normalen Betriebszustand das Fließmedium das Innere des Gehäuses (12) durchfließt,
- einem entgegen der Wirkung elastischer Mittel (22) verschiebbaren Ventilschieber (18) zum Sperren der Rohrbruchventileinrichtung (10) im Falle eines Leitungsbruchs oder einer Leckage,
- einer Drosseleinrichtung mit Drosselkanälen (28) und einem Raumvolumen (20), das über die Drosselkanäle (28) eingangsseitig und ausgangsseitig mit dem Inneren des Gehäuses (12) in Kommunikationsverbindung steht,
- wobei die Drosseleinrichtung verhindert, dass eine schlagartig auftretende Druckschwankung eine Sperrung durch den Ventilschieber (18) bewirkt, und im Fall eines Leitungsbruches oder eines über einen längeren Zeitraum vorhandenen Druckunterschiedes die Sperrung durch den Ventilschieber (18) ermöglicht,
- wobei das Gehäuse (12) eine in Fließrichtung (F) durchgehende Ausnehmung (30) aufweist,
- wobei in der Ausnehmung (30) der Ventilschieber (18) in Fließrichtung (F) verschieblich (V) angeordnet ist,
- wobei das Raumvolumen (20) der Drosseleinrichtung zumindest bereichsweise zwischen der Außenwandung des Ventilschiebers (18) und der Innenwandung des Gehäuses (12) angeordnet ist,
- **dadurch gekennzeichnet, dass**
- die eingangsseitig und ausgangsseitig vorhandenen Drosselkanäle (28) durch einen ersten Spalt (28.1) und einem zweiten Spalt (28.2) gebildet werden, die jeweils zwischen der Außenwandung des Ventilschiebers (18) und der Innenwandung des Gehäuses (12) vorhanden sind, und
- zwischen der Innenwandung des Gehäuses (12) und der Außenwandung des Ventilschiebers (18) keine Dichtmittel vorhanden sind.

2. Rohrbruchventileinrichtung nach Anspruch 1,
- **dadurch gekennzeichnet, dass**
- die Drosselkanäle (28.1, 28.2) durch an/in der Wandung des Ventilschiebers (18) und/oder des Gehäuses (12) vorhandene Spalte oder Ausnehmungen gebildet werden.

3. Rohrbruchventileinrichtung nach Anspruch 1,
- **dadurch gekennzeichnet, dass**
- die elastischen Mittel in dem Raumvolumen (20) angeordnet sind und den Ventilschieber (18) im normalen Betriebszustand in geöffneter Stellung halten.

4. Rohrbruchventileinrichtung nach einem oder mehreren der vorstehenden Ansprüche,
- **dadurch gekennzeichnet, dass**
- die elastischen Mittel (22) als Schraubenfeder ausgebildet sind.

5. Rohrbruchventileinrichtung nach Anspruch 3 oder 4,
- **dadurch gekennzeichnet, dass**
- der Ventilschieber (18) einen oberen an der Gehäuseinnenwandung anliegenden Flansch (32) aufweist und in Fließrichtung (F) beabstandet an der Innenwandung des Gehäuses (12) eine nach innen ragende an der Außenwandung des Ventilschiebers (18) anliegende Vorsprungeinheit (38) vorhanden ist und insbesondere die elastischen Mittel (22) zwischen dem Flansch (32) und der Vorsprungeinheit (38) angeordnet sind.

6. Rohrbruchventileinrichtung nach einem oder mehreren der vorstehenden Ansprüche,
- **dadurch gekennzeichnet, dass**
- der Ventilschieber (18) in einem Endbereich einen Ventilteller (24) aufweist, der im Falle eines Leitungsbruches dichtend mit einem an der Innenwandung des Gehäuses (12) vorhandenen Ventilsitz zur Anlage kommt, wobei die Verschiebung des Ventilschieber (18) durch Entweichen von Fluidmedium aus dem Raumvolumen über die Drosselkanäle (28.1, 28.2) aufgrund der im Falle eines Leitungsbruches vorhandenen Druckdifferenz ermöglicht wird.

7. Rohrbruchventileinrichtung nach Anspruch 5 oder 6,
- **dadurch gekennzeichnet, dass**
- an der nach außen weisenden Stirnwand des Flansches (32) und/oder an der nach innen weisenden Stirnwand der Vorsprungeinheit (38) zumindest ein oberer beziehungsweise unterer Drosselspalt (28.1, 28.2) eingeformt ist.

8. Rohrbruchventileinrichtung nach Anspruch 7,
- **dadurch gekennzeichnet, dass**
- die oberen und/oder unteren Drosselspalte (28.1, 28.2) radial in einem vorgegebenen Winkelraster vorhanden sind.

9. Rohrbruchventileinrichtung nach einem oder mehreren der vorstehenden Ansprüche,
- **dadurch gekennzeichnet, dass**
- der Ventilschieber (18) eine in Fließrichtung (F) offene Sacklochbohrung (34) aufweist.

10. Rohrbruchventileinrichtung nach einem oder mehreren der vorstehenden Ansprüche,
- **dadurch gekennzeichnet, dass**
- in der Wandung des Ventilschiebers (18) weitere, insbesondere im Wesentlichen quer zur Fließrichtung verlaufende, Drosselkanäle vorhanden sind.

11. Rohrbruchventileinrichtung nach einem oder mehreren der vorstehenden Ansprüche,
- **dadurch gekennzeichnet, dass**
- die Position des Ventilschiebers (18) im Normalbetriebszustand durch einen oberseitig an der Innenwandung des Gehäuses (12) angeordneten Sicherungsring (40), insbesondere nach DIN 472, in Verbindung mit den elastischen Mitteln (22) gewährleistet wird.

12. Rohrbruchventileinrichtung nach einem oder mehreren der vorstehenden Ansprüche,
- **dadurch gekennzeichnet, dass**
- das Gehäuse (12) außenseitig eine polygonale Umfangskontur, insbesondere Sechskantkontur, aufweist.

13. Rohrbruchventileinrichtung nach einem oder mehreren der vorstehenden Ansprüche,
- **dadurch gekennzeichnet, dass**
- im Bereich der Innenwandung der Sacklochbohrung (34) des Ventilschiebers (18) eine in Fließrichtung (F) gesehen unterseitige erste Sicherungseinheit, insbesondere Absatz (42) der Innenwandung des Ventilschiebers (18), und in Fließrichtung (F) gesehen oberseitige beabstandete zweite Sicherungseinheit, insbesondere zweite Ausnehmung (49) in der Innenwandung des Ventilschiebers (18) geeignet für ein Sicherungsring (44), vorhanden ist zum wahlweise lösbar arretierbaren Anordnen einer Drosselscheibe (46) mit zumindest einer Drosselausnehmung (48) zwischen beiden Sicherungseinheiten, die den Querschnitt der Sacklochausnehmung (34) verjüngt.

14. Rohrbruchventileinrichtung nach einem oder mehreren der Ansprüche 1 bis 13,
- **dadurch gekennzeichnet, dass**
- innerhalb des Ventilschiebers eine Drosselscheibe (46) mit Drosselausnehmung (48) angeordnet ist.

15. Rohrbruchventileinrichtung nach Anspruch 13 oder 14,
- **dadurch gekennzeichnet, dass**
- die Drosselscheibe (46) in Fließrichtung (F) gesehen im oberen offenen Endbereich der Sacklochbohrung (34) des Ventilschiebers (18) angeordnet ist.

## Claims

1. A pipe break valve device (10) for a flow medium, in particular hydraulic oil, within a line system, with
- a housing (12) through which the flow medium flows, with an inlet connection (14), in particular for a pipe (52), and with an outlet connection (16), in particular for a flexible line (54),
- in the normal operating state the flow medium flowing through the interior of the housing (12),
- a valve slide (18), displaceable counter to the action of elastic means (22), for shutting off the pipe break valve device (10) in the event of a line break or leakage,
- a throttle device with throttle ducts (28) and with a spatial volume (20) which is in communication connection with the interior of the housing (12) on the inlet side and on the outlet side via the throttle ducts (28),
- the throttle device preventing an abruptly occurring pressure fluctuation from causing a shut-off by the valve slide (18) and, in the event of a line break or of a pressure difference present for a lengthy period of time, allowing shut-off by the valve slide (18),
- whereby
- the housing (12) has a recess (30) continuous in the flow direction (F),
- the valve slide (18) is arranged displaceably (V) in the flow direction (F) in the recess (30),
- the spatial volume (20) of the throttle device is arranged at least in regions between the outer wall of the valve slide (18) and the inner wall of the housing (12),
- **characterized in that**,
- the throttle ducts (28) present on the inlet side and on the outlet side are formed by a first gap (28.1) and a second gap (28.2) which are present in each case between the outer wall of the valve slide (18) and the inner wall of the housing (12), and
- no sealing means are present between the inner wall of the housing (12) and the outer wall of the valve slide (18).

2. The pipe break valve device as claimed in claim 1,
- wherein
- the throttle ducts (28.1, 28.2) are formed by gaps or recesses present on/in the wall of the valve slide (18) and/or of the housing (12).

3. The pipe break valve device as claimed in claim 1,
- wherein
- the elastic means are arranged in the spatial volume (20) and in the normal operating state hold the valve slide (18) in the open position.

4. The pipe break valve device as claimed in one or more of the preceding claims,
- wherein
- the elastic means (22) are designed as a helical spring.

5. The pipe break valve device as claimed in claim 3 or 4,
- wherein
- the valve slide (18) has an upper flange (32) bearing against the housing inner wall, and an inwardly projecting projection unit (38) bearing against the outer wall of the valve slide (18) is present, spaced apart in the flow direction (F), on the inner wall of the housing (12), and, in particular, the elastic means (22) are arranged between the flange (32) and the projection unit (38).

6. The pipe break valve device as claimed in one or more of the preceding claims,
- wherein
- the valve slide (18) has in an end region a valve disk (24) which, in the event of a line break, comes sealingly into bearing contact with a valve seat present on the inner wall of the housing (12), the displacement of the valve slide (18) being made possible by the escape of fluid medium out of the spatial volume via the throttle ducts (28.1, 28.2) on account of the pressure difference present in the event of a line break.

7. The pipe break valve device as claimed in claim 5 or 6,
- wherein
- at least one upper and one lower throttle gap (28.1, 28.2) are integrally formed respectively on the outwardly pointing end wall of the flange (32) and/or on the inwardly pointing end wall of the projection unit (38).

8. The pipe break valve device as claimed in claim 7,
- wherein
- the upper and/or lower throttle gaps (28.1, 28.2) are present radially in a stipulated angle grid.

9. The pipe break valve device as claimed in one or more of the preceding claims,
- wherein
- the valve slide (18) has a blind hole bore (34) open in the flow direction (F).

10. The pipe break valve device as claimed in one or more of the preceding claims,
- wherein
- further throttle ducts running, in particular, essentially transversely with respect to the flow direction are present in the wall of the valve slide (18).

11. The pipe break valve device as claimed in one or more of the preceding claims,
- wherein
- the position of the valve slide (18) is ensured, in the normal operating state, by a securing ring (40), in particular according to DIN 472, arranged on the top side on the inner wall of the housing (12), in conjunction with the elastic means (22).

12. The pipe break valve device as claimed in one or more of the preceding claims,
- wherein
- the housing (12) has on the outside a polygonal circumferential contour, in particular hexagonal contour.

13. The pipe break valve device as claimed in one or more of the preceding claims,
- wherein
- a first securing unit located on the underside, as seen in the flow direction (F), in particular a step (42) of the inner wall of the valve slide (18), is present in the region of the inner wall of the blind hole bore (34) of the valve slide (18), and a spaced-apart second securing unit located on the top side, as seen in the flow direction (F), in particular a second recess (49), is present in the inner wall of the valve slide (18), and is suitable for a securing ring (44), for the selectively releasably lockable arrangement of a throttle disk (46) with at least one throttle recess (48) between the two securing units, which throttle disk narrows the cross section of the blind hole recess (34).

14. The pipe break valve device as claimed in one or more of claims 1 to 13,
- wherein
- a throttle disk (46) with a throttle recess (48) is arranged within the valve slide.

15. The pipe break valve device as claimed in claim 13 or 14,
- wherein
- the throttle disk (46) is arranged, as seen in the flow direction (F), in the upper open end region of the blind hole bore (34) of the valve slide (18).

## Revendications

1. Ensemble de vanne d'arrêt automatique (10) pour un fluide, en particulier du liquide hydraulique, à l'intérieur d'un système de conduites, avec
- un boîtier (12) à travers lequel s'écoule le fluide, avec un branchement d'entrée (14), en particulier pour une conduite rigide (52), et un branchement de sortie (16), en particulier pour une conduite souple (54),
- sachant que dans l'état de fonctionnement normal, le fluide traverse l'intérieur du boîtier (12),
- un tiroir de vanne (18) mobile en translation à l'encontre de l'action de moyens élastiques (22) et destiné à fermer l'ensemble de vanne d'arrêt automatique (10) dans le cas d'une rupture de conduite ou d'une fuite,
- un dispositif d'étranglement avec des canaux d'étranglement (28) et un volume spatial (20) qui se trouve en liaison de communication du côté d'entrée et de sortie avec l'intérieur du boîtier (12) par l'intermédiaire des canaux d'étranglement (28),
- sachant que le dispositif d'étranglement empêche qu'une fluctuation de pression se produisant brusquement provoque une fermeture par le tiroir de vanne (18), et permet la fermeture par le tiroir de vanne (18) dans le cas d'une rupture de conduite ou d'une différence de pression présente sur une assez longue durée,
- sachant que le boîtier (12) présente un évidement (30) continu dans la direction d'écoulement (F),
- sachant que le tiroir de vanne (18) est disposé dans l'évidement (30) à translation (V) dans la direction d'écoulement (F),
- sachant que le volume spatial (20) du dispositif d'étranglement est disposé au moins partiellement entre la paroi extérieure du tiroir de vanne (18) et la paroi intérieure du boîtier (12),
**caractérisé en ce que**
- les canaux d'étranglement (28) présents du côté d'entrée et du côté de sortie sont formés par un premier passage (28.1) et un deuxième passage (28.2) qui sont respectivement présents entre la paroi extérieure du tiroir de vanne (18) et la paroi intérieure du boîtier (12),
- et aucun moyen d'étanchéité n'est présent entre la paroi intérieure du boîtier (12) et la paroi extérieure du tiroir de vanne (18).

2. Ensemble de vanne d'arrêt automatique selon la revendication 1, **caractérisé en ce que** les canaux d'étranglement (28.1, 28.2) sont formés par des passages ou évidements présents sur/dans la paroi du tiroir de vanne (18) et/ou du boîtier (12).

3. Ensemble de vanne d'arrêt automatique selon la revendication 1, **caractérisé en ce que** les moyens élastiques sont disposés dans le volume spatial (20) et maintiennent le tiroir de vanne (18) en position ouverte dans l'état de fonctionnement normal.

4. Ensemble de vanne d'arrêt automatique selon une ou plusieurs des revendications précédentes, **caractérisé en ce que** les moyens élastiques (22) sont réalisés sous la forme de ressorts hélicoïdaux.

5. Ensemble de vanne d'arrêt automatique selon la revendication 3 ou 4, **caractérisé en ce que** le tiroir de vanne (18) présente une bride supérieure (32) appliquée contre la paroi intérieure du boîtier, et un ensemble formant saillie (38), dépassant vers l'intérieur et s'appliquant contre la paroi extérieure du tiroir de vanne (18), est présent à distance dans la direction d'écoulement (F) sur la paroi intérieure du tiroir de vanne (18), et les moyens élastiques (22) sont notamment disposés entre la bride (32) et l'ensemble formant saillie (38).

6. Ensemble de vanne d'arrêt automatique selon une ou plusieurs des revendications précédentes, **caractérisé en ce que** le tiroir de vanne (18) présente dans une région terminale un disque de vanne (24) qui, dans le cas d'une rupture de conduite, vient en application étanche avec un siège de vanne présent sur la paroi intérieure du boîtier (12), sachant que la translation du tiroir de vanne (18) est rendue possible par l'échappement de fluide du volume spatial par l'intermédiaire des canaux d'étranglement (28.1, 28.2) en raison de la différence de pression présente dans le cas d'une rupture de conduite.

7. Ensemble de vanne d'arrêt automatique selon la revendication 5 ou 6, **caractérisé en ce qu'**au moins un passage d'étranglement respectivement supérieur ou inférieur (28.1, 28.2) est formé sur la paroi frontale de la bride (32) qui est dirigée vers l'extérieur et/ou sur la paroi frontale de l'ensemble formant saillie (38) qui est dirigée vers l'intérieur.

8. Ensemble de vanne d'arrêt automatique selon la revendication 7, **caractérisé en ce que** les passages d'étranglement supérieurs et/ou inférieurs (28.1, 28.2) sont présents radialement dans une trame angulaire prédéfinie.

9. Ensemble de vanne d'arrêt automatique selon une ou plusieurs des revendications précédentes, **caractérisé en ce que** le tiroir de vanne (18) présente un perçage borgne (34) ouvert dans la direction d'écoulement (F).

10. Ensemble de vanne d'arrêt automatique selon une ou plusieurs des revendications précédentes, **caractérisé en ce que** d'autres canaux d'étranglement, s'étendant notamment sensiblement transversalement à la direction d'écoulement, sont présents dans la paroi du tiroir de vanne (18).

11. Ensemble de vanne d'arrêt automatique selon une ou plusieurs des revendications précédentes, **caractérisé en ce que** la position du tiroir de vanne (18) dans l'état de fonctionnement normal est assurée par un jonc d'arrêt (40), en particulier selon la norme DIN 472, disposé sur le côté supérieur sur la paroi intérieure du boîtier (12), en association avec les moyens élastiques (22).

12. Ensemble de vanne d'arrêt automatique selon une ou plusieurs des revendications précédentes, **caractérisé en ce que** le boîtier (12) présente sur le côté extérieur un contour périphérique polygonal, en particulier un contour hexagonal.

13. Ensemble de vanne d'arrêt automatique selon une ou plusieurs des revendications précédentes, **caractérisé en ce qu'**une première unité de blocage, située sur le côté inférieur considéré dans la direction d'écoulement (F), en particulier un décrochement (42) de la paroi intérieure du tiroir de vanne (18), est présente dans la région de la paroi intérieure du perçage borgne (34) du tiroir de vanne (18), et une deuxième unité de blocage, située sur le côté supérieur considéré dans la direction d'écoulement (F), en particulier un deuxième évidement (49) dans la paroi intérieure du tiroir de vanne (18), est présente à distance de la première et convient pour un jonc d'arrêt (44), en vue de la disposition avec blocage sélectivement libérable, entre les deux unités de blocage, d'un disque d'étranglement (46) pourvu d'au moins un évidement d'étranglement (48) qui rétrécit la section du perçage borgne (34).

14. Ensemble de vanne d'arrêt automatique selon une ou plusieurs des revendications 1 à 13, **caractérisé en ce qu'**un disque d'étranglement (46) pourvu d'un évidement d'étranglement (48) est disposé à l'intérieur du tiroir de vanne.

15. Ensemble de vanne d'arrêt automatique selon la revendication 13 ou 14, **caractérisé en ce que** le disque d'étranglement (46) est disposé, considéré dans la direction d'écoulement (F), dans la région terminale supérieure ouverte du perçage borgne (34) du tiroir de vanne (18).
